# EUROPÄISCHE PATENTANMELDUNG

(11) **EP 2 368 957 A1**
(43) Veröffentlichungstag der Anmeldung: **28.09.2011**
(21) Anmeldenummer: 10158078.5
(22) Anmeldetag: 26.03.2010
(51) Int. Cl.: C09J 163/00, C09J 175/00

(54) **Verstärkungselement zur Verstärkung in Hohlräumen von strukturellen Bauteilen**

(71) Anmelder: Sika Technology AG, 6340 Baar (CH)
(72) Erfinder: GÖSSI, Matthias, 8610, Uster (CH); FINTER, Jürgen, 8037, Zürich (CH); FRICK, Karsten, 5453, Remetschwil (CH); BLANK, Norman, 8803, Rüschlikon (CH)
(74) Vertreter: Sika Patent Attorneys

(57) **Zusammenfassung**

Die vorliegende Erfindung betrifft Verstärkungselement zur Verstärkung in Hohlräumen von strukturellen Bauteilen umfassend einen Träger aus einem Kunststoff, welcher zumindest teilweise mit einem Metall beschichtet ist; und
- einen an der Metallbeschichtung des Trägers angebrachten schäumbaren, hitzehärtenden Strukturklebstoff;
oder
- einen an der Metallbeschichtung des Trägers angebrachten hitzehärtenden Strukturklebstoff, welcher als Formgedächtnis-Material ausgebildet ist.

## Beschreibung

### Technisches Gebiet

Die Erfindung liegt auf dem Gebiet der Verstärkungselemente zur Verstärkung in Hohlräumen von strukturellen Bauteilen, wie sie beispielsweise bei Automobilkarosserien und dergleichen eingesetzt werden.

### Stand der Technik

Insbesondere um die mechanischen Eigenschaften hohlräumiger struktureller Bauteile, wie sie beispielsweise bei Automobilkarosserien vorkommen, zu verbessern, ist es weitgehend üblich, lokale Verstärkungselemente in die Bauteile einzusetzen oder einzubauen. Derartige Verstärkungselemente bestehen typischerweise aus einem Träger, an welchem ein Strukturklebstoff angebracht ist. Beim Träger handelt es sich um einen Kunststoff oder um ein Metall.

Ein bedeutender Nachteil der Träger aus Kunststoff ist, dass jene Kunststoffe, welche aufgrund ihrer Eigenschaften wie Mechanik, Verarbeitbarkeit sowie aus ökonomischen Gesichtspunkten, als Trägermaterialien in Frage kommen, gegenüber Strukturklebstoffen nicht besonders haftfreundlich sind. Träger aus Metall, welche wiederum aufgrund ihrer Eigenschaften geeignet wären, weisen sehr oft ein höheres Gewicht auf, was vor allem im Automobilbau unerwünscht ist.

### Darstellung der Erfindung

Die Aufgabe der vorliegenden Erfindung ist es daher, ein Verstärkungselement zur Verfugung zu stellen, welcher die Nachteile des Standes der Technik überwindet und einen Träger aufweist, welcher ein geringes Gewicht aufweist und haftfreundlich gegenüber Strukturklebstoffen ist.

Überraschenderweise wurde gefunden, dass ein Verstärkungselement gemäss Anspruch 1 diese Aufgabe löst.

Es wurde gefunden, dass erfindungsgemässe Verstärkungselemente, welche einen Träger aus einem Kunststoff aufweisen, welcher zumindest teilweise mit einem Metall beschichtet ist, mit einem geringen Gewicht ausgebildet werden können und haftfreundlich gegenüber Strukturklebstoffen sind.

Ein weiterer bedeutender Vorteil der erfindungsgemässen Verstärkungselemente ist, dass der Strukturklebstoff, welcher sich auf dem Träger befindet, durch die Metallschicht induktiv erwärmt werden kann, obwohl der Träger zu einem grossen Teil aus Kunststoff besteht. So kann ein allfälliger Temperaturbedingter Formänderungsvorgang im Strukturklebstoff sowie dessen Härtung sehr gezielt, energiesparend und unabhängig von anderen Verfahrensschritten gesteuert werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Anhand der Zeichnungen werden Ausführungsbeispiele der Erfindung näher erläutert. Gleiche Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:
Figur 1 schematisch einen Ausschnitt aus einem Verstärkungselement;
Figur 2 schematisch einen Ausschnitt aus einem Verstärkungselement mit Nägel;
Figur 3 schematisch einen Ausschnitt aus einem Verstärkungselement mit Bördelung;
Figur 4 schematisch die Herstellung eines Verstärkungselements;
Figur 5 schematisch ein Verfahren zur Verstärkung in einem Hohlraum eines strukturellen Bauteils.

In den Figuren sind nur die für das unmittelbare Verständnis der Erfindung wesentlichen Elemente gezeigt.

### Wege zur Ausführung der Erfindung

Die vorliegende Erfindung betrifft in einem ersten Aspekt ein Verstärkungselement zur Verstärkung in Hohlräumen von strukturellen Bauteilen umfassend einen Träger aus einem Kunststoff, welcher zumindest teilweise mit einem Metall beschichtet ist; und
- einen an der Metallbeschichtung des Trägers angebrachten schäumbaren, hitzehärtenden Strukturklebstoff;
   oder
- einen an der Metallbeschichtung des Trägers angebrachten hitzehärtenden Strukturklebstoff, welcher als Formgedächtnis-Material ausgebildet ist.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als Kunststoffe für den Träger eignen sich insbesondere Polyurethane, Polyamide, Polyester und Polyolefine und Polyolefin-Copolymere, bevorzugt hochtemperaturbeständige Polymere wie Poly(phenylenether), Polysulfone oder Polyethersulfone. Meist bevorzugte Kunststoffe sind Polyamide (PA) wie PA6 oder PA66, Polyethlyen und Polypropylen sowie Polystyrol und Copolymere wie Acrylnitril-Butadien-Styrol (ABS).

Der Kunststoff zur Herstellung des Trägers kann weitere Bestandteile enthalten, welche seine chemischen und physikalischen Eigenschaften beeinflussen. Beispielsweise weist der Kunststoff einen Füllstoff auf. Derartige weitere Bestandteile sind dem Fachmann im Allgemeinen bekannt.

Bevorzugte Metalle, mit welchen der Kunststoff beschichtet ist, sind Aluminium, Stahl, Nickel und Legierungen dieser Metalle. Insbesondere handelt es sich beim Metall um ein Metall, welches durch Induktion erwärmbar ist, das heisst durch ein elektromagnetisches Wechselfeld einer Induktionsspule.

Das Metall kann weiterhin unbehandelt vorliegen oder es kann mit geeigneten Mitteln, beispielsweise zur Verhinderung von Korrosion oder zur Verbesserung der Haftung vorbehandelt sein.

Das Metall, mit welchem der Kunststoff beschichtet ist, kann dabei auf beliebige Art und Weise am Kunststoff befestigt sein. Beispielsweise erfolgt die Befestigung durch mechanische Befestigungsmittel wie Nägel, Schrauben, Nieten, mechanischen Clips, Klemmen, Bördeln und dergleichen, oder durch Verkleben des Metalls mit dem Kunststoff. Weiterhin kann das Metall auch mittels Kunststoffgalvanisierung auf den Kunststoff aufgetragen worden sein.

Meist bevorzugt beträgt die Schichtdicke der Metallschicht auf dem Kunststoffträger 0.03 bis 1.5 mm.

Der Träger aus Kunststoff, welcher mit einem Metall beschichtet ist, weist gegenüber einem reinen Metallträger den Vorteil auf, dass er einerseits leichter ist und dass er andererseits, durch die Eigenschaften des Kunststoffs wie die Wahl des Materials und dessen Verarbeitung, in seinen mechanischen Eigenschaften und in seiner Ausgestaltung sehr breit variiert werden kann. Der Vorteil der Metallbeschichtung gegenüber einem reinen Kunststoffträger ist, dass die Metalle in der Regel haftfreundlicher sind. Ein weiterer Vorteil der Metallbeschichtung ist, dass bei hitzehärtenden Strukturklebstoffen die Metallschicht sehr lokal und effizient durch Induktion erwärmt werden kann.

Der Träger kann weiterhin einen beliebigen Aufbau und eine beliebige Struktur aufweisen. Es kann beispielsweise massiv, hohl oder geschäumt sein oder eine gitterartige Struktur aufweisen. Die Oberfläche des Trägers, das heisst der Kunststoff oder das Metall, kann typischerweise glatt, rau oder strukturiert sein. Weiterhin kann der Träger faserverstärkt sein.

Der Träger kann, zusätzlich zur seiner Funktion als Träger für den Strukturklebstoff, zur strukturellen Verstärkung oder zur Abdichtung des Bauteils oder auch zur Geräuschdämmung beitragen.

Der Träger kann weiterhin mindestens ein Befestigungsmittel, insbesondere einen Clip, zur Befestigung und Platzierung des Verstärkungselements in einem Hohlraum aufweisen. Die Befestigung des Verstärkungselements mit einem Clip eignet sich insbesondere für Anwendungen, bei welchen die gesamte Oberfläche des Bauteils, also auch die Hohlrauminnenwand, beispielsweise für eine Tauchlackierung erreichbar sein muss. In solchen Fällen ist eine Befestigung beispielsweise durch Verkleben nicht geeignet, da der Lack die Stelle der Verklebung nicht erreichen kann.

Die Herstellung des Trägers erfolgt typischerweise im Spritzgussverfahren.

Beim hitzehärtenden Strukturklebstoff handelt es sich vorzugsweise um eine Epoxidharzzusammensetzung oder um eine Polyurethanzusammensetzung.

In einer ersten Ausführungsform handelt es sich beim hitzehärtenden Strukturklebstoff um einen schäumbaren, hitzehärtenden Strukturklebstoff. Der hitzehärtende Strukturklebstoff kann auf beliebige Art und Weise geschäumt werden, wobei jedoch darauf zu achten ist, dass der Schäumungsvorgang im Wesentlichen vor der Aushärtung des Strukturklebstoffs erfolgt.

Ein solcher schäumbarer Strukturklebstoff weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage Schaumstrukturen in Polymeren zu erzeugen.

Bevorzugt wird der schäumbarer Strukturklebstoff thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete chemische Treibmittel sind beispielsweise auch kommerziell erhältlich unter dem Handelsnamen Celogen^{®} von Chemtura Corp., USA.

Geeignete physikalische Treibmittel sind beispielsweise kommerziell erhältlich unter dem Handelsnamen Expancel^{®} von Akzo Nobel, Niederlande.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

In einer zweiten Ausführungsform handelt es sich beim hitzehärtenden Strukturklebstoff um Formgedächtnis-Material.

Ein Formgedächtnis-Material weist dabei neben dem hitzehärtenden Strukturklebstoff mindestens ein Elastomer auf, welches als durchdringendes Polymernetzwerk im Strukturklebstoff vorliegt.

Handelt es sich beim hitzehärtenden Strukturklebstoff um ein Formgedächtnis-Material auf Basis einer Epoxidharzzusammensetzung, sollte diese eine Glasübergangstemperatur Tg aufweisen, welche über Raumtemperatur liegt.

Handelt es sich beim hitzehärtenden Strukturklebstoff um ein Formgedächtnis-Material auf Basis einer Polyurethanzusammensetzung, sollte diese einen Schmelzpunkt aufweist, welcher über Raumtemperatur liegt.

Im vorliegenden Dokument beziehen sich also Angaben zur Glasübergangstemperatur Tg, auf jene Ausführungsform der erfindungsgemässen Zusammensetzung, bei welcher der hitzehärtende Strukturklebstoff eine Epoxidharzzusammensetzung ist, sofern nichts anderes angegeben ist. Entsprechend beziehen sich Angaben zum Schmelzpunkt auf jene Ausführungsform, bei welcher der hitzehärtende Strukturklebstoff eine Polyurethanzusammensetzung ist.

Der Term "durchdringendes Polymernetzwerk" wird im vorliegenden Dokument in Anlehnung an die Definition eines "Semi-interpenetrierenden Polymernetzwerks" (semi-interpenetrating polymer network (SIPN)) gemäss IUPAC Compendium of Chemical Terminology, 2nd Edition (1997) verwendet. Demnach umfasst das SIPN mindestens ein Netzwerk sowie mindestens ein lineares oder verzweigtes Polymer, wobei dieses Polymer das Netzwerk zumindest teilweise durchdringt. In der erfindungsgemässen Zusammensetzung bildet das Elastomer das Netzwerk, das Polymer ist Bestandteil des hitzehärtenden Strukturklebstoffs.

Die erfindungsgemässe Zusammensetzung, welche ein "Formgedächtnis-Material" ("shape memory material") darstellt, kann bei ihrer Herstellung oder Verarbeitung in eine bestimmte Form ("ursprüngliche Form") gebracht werden und weist nach dieser Formgebung eine feste Konsistenz auf, das heisst, dass der Strukturklebstoff bei einer Temperatur unterhalb seiner Glasübergangstemperatur Tg bzw. unterhalb seines Schmelzpunktes vorliegt. In dieser Form liegt das Elastomer, welches als durchdringendes Polymernetzwerk im Strukturklebstoff vorliegt, im Wesentlichen entspannt vor. Bei Bedarf wird die Zusammensetzung dann auf eine Temperatur oberhalb der Glasübergangstemperatur Tg bzw. des Schmelzpunkts des Strukturklebstoffs erwärmt und in eine beliebige Form ("temporäre Form") gebracht. In dieser temporären Form liegt das Elastomer in einer gespannten Form vor. Die Zusammensetzung wird in dieser temporären Form gehalten und die Temperatur der Zusammensetzung wird wieder unter die Glasübergangstemperatur Tg bzw. unter den Schmelzpunkt des Strukturklebstoffs gesenkt, wodurch sich die Zusammensetzung in der temporären Form verfestigt. In dieser temporären Form ist die Zusammensetzung lagerstabil und kann einer Verarbeitung, beispielsweise Stanzen oder Schneiden, unterzogen werden. Wird die Zusammensetzung zu einem späteren Zeitpunkt wieder auf eine Temperatur erwärmt, welche oberhalb der Glasübergangstemperatur Tg bzw. des Schmelzpunkts des Strukturklebstoffs liegt, bringt sich das Elastomer wieder in seine entspannte Form und verformt somit die gesamte Zusammensetzung in ihre ursprüngliche Form.

Das in der erfindungsgemässen Zusammensetzung vorhandene Elastomer, welches als durchdringendes Polymernetzwerk im Strukturklebstoff vorliegt, ist insbesondere ein thermoplastisches Elastomer. Vorzugsweise weist dieses thermoplastische Elastomer eine Glasübergangstemperatur Tg(Elastomer) auf, welche niedriger als die Glasübergangstemperatur Tg des hitzehärtenden Strukturklebstoffs ist.

Insbesondere weist das thermoplastische Elastomer einen Schmelzpunkt auf, welcher über der Glasübergangstemperatur Tg bzw. dem Schmelzpunkt des hitzehärtenden Strukturklebstoffs liegt. Bevorzugt weist das thermoplastische Elastomer einen Schmelzpunkt von 50°C bis 200°C, insbesondere von 70°C bis 160°C, auf.

Das thermoplastische Elastomer weist vorzugsweise ein Molekulargewicht Mₙ von ≥ 50'000 g/mol, insbesondere 70'000 bis 300'000 g/mol, auf. In diesem Molekulargewichtsbereich weist das thermoplastische Elastomer den Vorteil auf, dass es thermoplastisch verarbeitbar ist und gute mechanische Eigenschaften aufweist.

Meist bevorzugt ist das thermoplastische Elastomer ausgewählt aus der Gruppe bestehend aus Polyolefinen und Polyolefin-Copolymeren. Beispielsweise sind dies Polyethylen (PE), Polypropylen (PP), Ethylenvinylacetat (EVA) und dergleichen. Es ist beispielsweise auch denkbar, dass in der erfindungsgemässen Zusammensetzung eine Mischung von zwei oder mehr Elastomeren vorhanden ist.

Bei der Herstellung der erfindungsgemässen Zusammensetzung, wird der hitzehärtende Strukturklebstoff bei einer Temperatur über seiner Glasübergangstemperatur Tg mit dem thermoplastischen Elastomer vermischt bis eine homogene Mischung erhalten wird. Das Vermischen des hitzehärtenden Strukturklebstoffs mit dem thermoplastischen Elastomer erfolgt meist bevorzugt bei einer Temperatur oberhalb des Schmelzpunktes der Elastomers, beispielsweise in einem Extruder.

Handelt es sich beim hitzehärtenden Strukturklebstoff um einen hitzehärtenden Strukturklebstoff, kann der Strukturklebstoff vor der Zugabe des Härters mit dem Elastomer vermischt werden. Dadurch kann die Temperatur beim Vermischen bis oder sogar über die Aushärtungstemperatur des hitzehärtenden Strukturklebstoffs eingestellt werden, ohne dass es zu einer Aushärtung des Strukturklebstoffs kommt. Bei höheren Temperaturen wird in der Regel eine effizientere Vermischung erreicht.

Weiterhin ist es möglich, anstelle eines thermoplastischen Elastomers ein nicht-thermoplastisches Elastomer einzusetzen. Dabei weist auch das nicht-thermoplastische Elastomer insbesondere eine Glasübergangstemperatur Tg(nicht-thermoplastisches Elastomer) auf, welche niedriger als die Glasübergangstemperatur Tg des hitzehärtenden Strukturklebstoffs ist.

Beispielsweise ist ein chemisch vernetztes Elastomer aufgebaut aus polymeren Polyolen und Polyisocyanaten oder aus Epoxidharzen und amino-oder carboxylterminierten Flüssigkautschuken.

Handelt es sich beim Elastomer um ein nicht-thermoplastisches, das heisst um ein chemisch vernetztes Elastomer, wird die erfindungsgemässe Zusammensetzung dadurch hergestellt, dass die polymeren Bestandteile zur Herstellung des Elastomers vor ihrer Vernetzung mit dem hitzehärtenden Strukturklebstoff über dessen Glasübergangstemperatur Tg vermischt werden. Bei Erreichen einer homogenen Vermischung wird die Zusammensetzung dann in ihre ursprüngliche Form gebracht und die polymeren Bestandteile zur Herstellung des Elastomers werden in dieser ursprünglichen Form zu einem Elastomer vernetzt.

Der Einsatz eines thermoplastischen Elastomers weist den Vorteil auf, dass die aufwendige Einstellung eines Temperaturbereichs, in welchem die polymeren Bestandteile zur Herstellung des Elastomers zum Elastomer vernetzt werden nicht nötig ist.

Insbesondere handelt es sich bei der erfindungsgemässen Zusammensetzung um ein Formgedächtnis-Material, welches bei Raumtemperatur (23°C) fest ist, was eine optimale Handhabung des Materials in seiner ursprünglichen und in seiner temporären Form erlaubt.

Damit die erfindungsgemässe Zusammensetzung bei Raumtemperatur fest ist, sollte der hitzehärtende Strukturklebstoff eine Glasübergangstemperatur Tg, im Fall einer Epoxidharzzusammensetzung, bzw. einen Schmelzpunkt, im Fall einer Polyurethanzusammensetzung, aufweisen, welcher über der Raumtemperatur liegt. Ansonsten könnte die erfindungsgemässe Zusammensetzung, nachdem sie in ihre temporäre Form gebracht wurde, das in dieser temporären Form angespannte Elastomer, bei Raumtemperatur nicht in dieser Form halten.

Vorzugsweise handelt es sich beim hitzehärtende Strukturklebstoff um
- eine Epoxidharzzusammensetzung mit einer Glasübergangstemperatur Tg im Bereich von 23°C bis 95°C, insbesondere von 30°C bis 80°C, bevorzugt von 35°C bis 75°C; oder um
- eine Polyurethanzusammensetzung mit einem Schmelzpunkt im Bereich von 23°C bis 95°C, insbesondere von 30°C bis 80°C, bevorzugt von 35°C bis 75°C.

Weiterhin bevorzugt ist die Oberfläche der erfindungsgemässen Zusammensetzung bei Raumtemperatur nicht klebrig, was ihre Handhabung erleichtert.

Der hitzehärtende Strukturklebstoff weist vorzugsweise eine Aushärtungstemperatur im Bereich von 120°C bis 220°C, insbesondere 160°C bis 200°C, auf.

Bei der Verarbeitung der Zusammensetzung, bei welcher sie in ihre temporäre Form gebracht wird, darauf geachtet werden, dass die Zusammensetzung nicht soweit erwärmt wird, dass der Aushärtungsvorgang einsetzt.

Meist bevorzugt ist der hitzehärtende Strukturklebstoff eine Epoxidharzzusammensetzung umfassend mindestens ein Epoxidharz **A** und mindestens einen Härter **B** für Epoxidharze, welcher durch erhöhte Temperatur aktiviert wird. Insbesondere handelt es sich dabei um eine einkomponentige Epoxidharzzusammensetzung.

Das Epoxidharz **A,** weist durchschnittlich mehr als eine Epoxidgruppe pro Molekül auf und ist insbesondere ein Epoxid-Festharz oder eine Mischung eines Epoxid-Festharzes mit einem Epoxid-Flüssigharz. Der Begriff "Epoxid-Festharz" ist dem Epoxid-Fachmann bestens bekannt und wird im Gegensatz zu "Epoxid-Flüssigharz" verwendet. Die Glasübergangstemperatur Tg von Festharzen liegt über Raumtemperatur.

Bevorzugte Epoxid-Festharze weisen die Formel (I) auf.

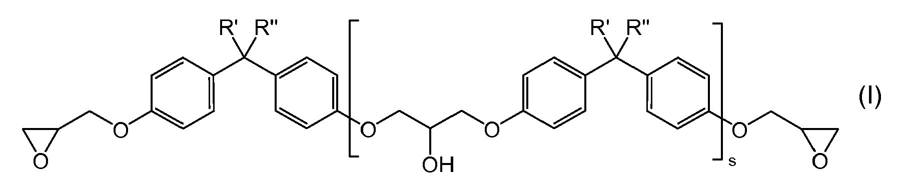

Hierbei stehen die Substituenten R' und R" unabhängig voneinander entweder für H oder CH₃. Weiterhin steht der Index s für einen Wert von ≥ 1, insbesondere von ≥ 1.5, bevorzugt von 2 bis 12.

Derartige Epoxid-Festharze sind beispielsweise kommerziell erhältlich von Dow Chemical Company, USA, von Huntsman International LLC, USA, oder von Hexion Specialty Chemicals Inc, USA.

Bevorzugte Epoxid-Flüssigharze, welche insbesondere zusammen mit einem Epoxid-Festharz verwendet werden können, weisen die Formel (II) auf.

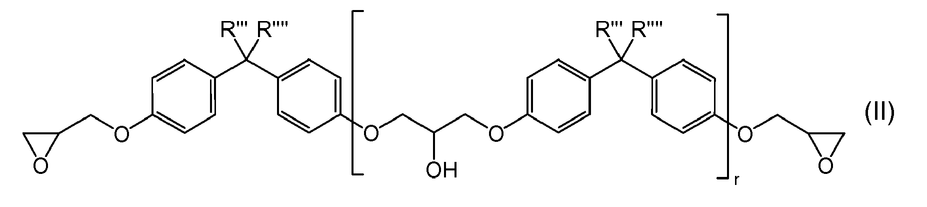

Hierbei stehen die Substituenten R'" und R"" unabhängig voneinander entweder für H oder CH₃. Weiterhin steht der Index r für einen Wert von 0 bis 1. Bevorzugt steht r für einen Wert von ≤ 0.2.

Es handelt sich somit vorzugsweise um Diglycidylether von Bisphenol-A (DGEBA), von Bisphenol-F sowie von Bisphenol-A/F. Die Bezeichnung "A/F" verweist hierbei auf eine Mischung von Aceton mit Formaldehyd, welche als Edukt bei dessen Herstellung verwendet wird. Solche Flüssigharze sind beispielsweise unter den Handelsnamen Araldite^{®} GY 250, Araldite^{®} PY 304, Araldite^{®} GY 282 von Huntsman International LLC, USA, oder D.E.R.^{®} 331 oder D.E.R.^{®} 330 von Dow Chemical Company, USA, oder unter dem Handelsnamen Epikote^{®} 828 oder Epikote^{®} 862 von Hexion Specialty Chemicals Inc, USA, kommerziell erhältlich.

Je nach Ausführungsform kann es sich beim Epoxidharz, welches als eine der Ausgangsverbindungen im hitzehärtenden Strukturklebstoff eingesetzt wird, auch um ein Epoxid-Flüssigharz handeln. Dies ist typischerweise dann der Fall, wenn der hitzehärtende Strukturklebstoff zur Ausbildung eines Formgedächtnis-Materials mindestens ein chemisch vernetztes Elastomer umfasst, wobei die chemische Vernetzung der polymeren Bestandteile zur Herstellung dieses Elastomers zu einer Erhöhung der Glasübergangstemperatur Tg des hitzehärtende Strukturklebstoffs führt, sodass diese im, für die Handhabung des Materials, geeigneten Bereich liegt. Dies ist beispielsweise der Fall, wenn das chemisch vernetzte Elastomer zumindest teilweise aus dem eingesetzten Epoxid-Flüssigharz aufgebaut wird.

Weitere geeignete Epoxidharze sind sogenannte Novolake. Diese weisen insbesondere die folgende Formel (III) auf.

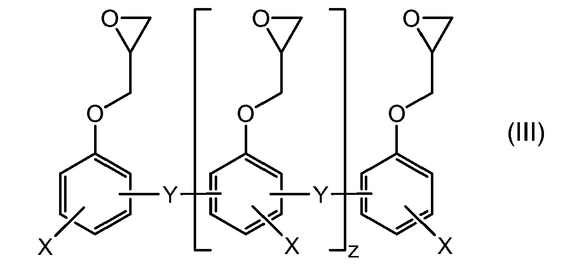

Dabei steht der Rest X für ein Wasserstoffatom oder für eine Methylgruppe. Der Rest Y steht für -CH₂- oder für einen Rest der Formel (IV).

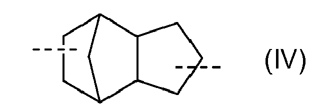

Weiterhin steht der Index z für einen Wert von 0 bis 7, insbesondere für einen Wert ≥ 3.

Insbesondere handelt es sich hierbei um Phenol- oder Kresol-Novolake (Y steht für -CH₂-).

Derartige Epoxidharze sind unter dem Handelsnamen EPN oder ECN sowie Tactix^{®} 556 von Huntsman International, LLC, USA, oder unter der Produktreihe D.E.N.™ von Dow Chemical Company, USA, kommerziell erhältlich.

Bevorzugt stellt das Epoxidharz **A** ein Epoxid-Festharz der Formel (I) dar. In einer ebenfalls bevorzugten Ausführungsform enthält die hitzehärtende Epoxidharzzusammensetzung sowohl mindestens ein Epoxid-Festharz der Formel (I) als auch mindestens ein Epoxid-Flüssigharz der Formel (II).

Der Anteil von Epoxidharz **A** beträgt vorzugsweise 2 bis 90 Gew.-%, insbesondere 5 bis 70 Gew.-%, bevorzugt 10 bis 60 Gew.-%, bezogen auf das Gesamtgewicht des hitzehärtenden Strukturklebstoffs.

Der Härter **B** für Epoxidharze wird durch erhöhte Temperatur aktiviert. Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), sowie Imidazole und Amin-Komplexe.

Besonders bevorzugt als Härter **B** ist Dicyandiamid, insbesondere in Kombination mit einem substituierten Harnstoff. Der Vorteil der Kombination von Dicyandiamid mit einem substituierten Harnstoff liegt in der dadurch erzielten beschleunigten Aushärtung der Zusammensetzung.

Der Anteil des Härters **B** beträgt vorzugsweise 0.05 bis 8 Gew.-%, insbesondere 0.1 bis 6 Gew.-%, bevorzugt 0.2 bis 5 Gew.-%, bezogen auf das Gesamtgewicht des hitzehärtenden Strukturklebstoffs.

Der Begriff "Härter" schliesst im vorliegenden Dokument auch Katalysatoren und katalytisch wirkende Verbindungen mit ein. Dem Fachmann ist in diesem Fall klar, dass beim Einsatz eines Katalysators oder einer katalytisch wirkenden Verbindung als Härter **B,** der Anteil der Härters **B** am gesamten hitzehärtenden Strukturklebstoff im unteren Bereich des angegebenen Wertebereichs liegt.

Zusätzlich kann die Epoxidharzzusammensetzung mindestens ein Schlagzähigkeitsmodifikator umfassen.

Unter einem "Schlagzähigkeitsmodifikator" wird in diesem Dokument ein Zusatz eines organischen Polymers zu einer Epoxidharzmatrix verstanden, der bereits in geringen Mengen, d.h. von typischerweise zwischen 0.1 und 20 Gew.-%, eine deutliche Zunahme der Zähigkeit bewirkt und somit in der Lage ist, höhere Schlag- oder Stossbeanspruchung aufzunehmen, bevor die Matrix einreisst oder bricht.

Als Schlagzähigkeitsmodifikatoren eignen sich insbesondere reaktive Flüssigkautschuke auf Basis von Nitrilkautschuk oder Derivate von Polyetherpolyol-Polyurethanen, Core-Shell Polymere und ähnliche dem Fachmann bekannte Systeme.

Geeignete Schlagzähigkeitsmodifikatoren sind als Schlagzähigkeitsmodifikatoren **D** beschrieben in der europäischen Patentanmeldung mit der Anmeldenummer EP08168009.2, deren Inhalt hiermit durch Bezugnahme eingeschlossen wird.

Insbesondere handelt es sich beim Schlagzähigkeitsmodifikator um ein nicht-thermoplastisches Elastomer.

Ebenfalls geeignet ist der hitzehärtende Strukturklebstoff eine einkomponentige, hitzehärtende Polyurethanzusammensetzung, welche bei Raumtemperatur eine feste Konsistenz aufweist.

Einkomponentige, hitzehärtende Polyurethanzusammensetzungen, welche bei Raumtemperatur eine feste Konsistenz aufweisen, sind dem Fachmann bekannt und können unterschiedliche Härtungsmechanismen aufweisen.

In einer ersten Ausführungsform werden Polyurethanzusammensetzungen eingesetzt, welche neben einem festen Isocyanatgruppen terminierten Polyurethanpolymer, weiterhin mindestens ein Aldimin, insbesondere ein Polyaldimin, als Härter aufweisen. Beim Erhöhen der Temperatur und der dadurch verursachten Erweichung des Polyurethanpolymers, kann Wasser, insbesondere in Form von Luftfeuchtigkeit, in die Polyurethanzusammensetzung eindringen, wodurch es zur Hydrolysierung der Aldimine und dadurch zur Freisetzung von Aminen kommt, welche dann mit den Isocyanatgruppen reagieren und zur Aushärtung der Zusammensetzung führen.

Beispielsweise sind derartige geeignete hitzehärtende Polyurethanzusammensetzungen beschreiben in WO 2008/059056 A1, deren gesamte Offenbarung hiermit durch Bezugnahme eingeschlossen wird.

In einer zweiten Ausführungsform können Polyurethanzusammensetzungen eingesetzt werden, welche neben einem Isocyanatgruppen terminierten Polyurethanpolymer weiterhin mindestens einen Härter aufweisen, welcher gegenüber Isocyanaten reaktive Gruppen enthält und in blockierter Form vorliegt. Die Blockierung kann dabei chemischer oder physikalischer Natur sein. Beispiele für geeignete chemisch blockierte Härter sind über eine Komplexbindung an Metalle gebundene Polyamine, im Besonderen Komplexverbindungen von Methylendianilin (MDA) und Natriumchlorid. Solche Komplexverbindungen werden üblicherweise mit der Bruttoformel (MDA)₃·NaCl beschrieben. Ein geeigneter Typ ist als Dispersion in Diethylhexylphthalat unter dem Handelsnamen Caytur^{®} 21 von Chemtura Corp., USA, erhältlich. Der Komplex zersetzt sich beim Erwärmen auf 80 bis 160°C mit bei höherer Temperatur zunehmender Geschwindigkeit, wodurch Methylendianilin als aktiver Härter freigesetzt wird.

Beispiele für physikalisch blockierte Härter sind mikroverkapselte Härter. Zur Verwendung als Härter in mikroverkapselter Form insbesondere geeignet sind zwei- oder mehrwertige Alkohole, kurzkettige Polyesterpolyole, aliphatische, cycloaliphatische und aromatische Aminoalkohole, Hydrazide von Dicarbonsäuren, aliphatische Polyamine, cycloaliphatische Polyamine, Ethergruppen-haltige aliphatische Polyamine, Polyoxyalkylen-Polyamine, beispielsweise erhältlich unter dem Namen Jeffamine^{®} (von Huntsman International LLC, USA), aromatische Polyamine. Bevorzugt sind aliphatische, cycloaliphatische und aromatische Polyamine, insbesondere Ethanolamin, Propanolamin, Butanolamin, N-Methylethanolamin, Diethanolamin, Triethanolamin.

Eine ausführliche Aufzählung von geeigneten Härtern zur Verwendung in mikroverkapselter Form ist beispielsweise zu finden auf Seite 14, ab Zeile 25 in WO 2009/016106 A1, dessen gesamte Offenbarung hiermit durch Bezugnahme eingeschlossen wird.

Die Mikroverkapselung dieser Härter kann nach einem der gängigen Verfahren durchgeführt werden, beispielsweise mittels Sprühtrocknung, Grenzflächenpolymerisation, Koazervation, Tauch- oder Zentrifugenverfahren, Wirbelbettverfahren, Vakuum-Verkapselung, elektrostatische Mikroverkapselung. Die so erhaltenen Mikrokapseln haben eine Partikelgrösse von 0.1 bis 100 µm, bevorzugt 0.3 bis 50 µm. Die Grösse der Mikrokapseln ist so bemessen, dass sie sich beim Erhitzen einerseits effektiv öffnen, und andererseits nach der Aushärtung eine optimale Homogenität und damit Kohäsionsfestigkeit des Strukturklebstoffs erhalten wird. Sie dürfen weiterhin keinen schädlichen Einfluss auf die Adhäsionseigenschaften des Strukturklebstoffs ausüben. Als Material für die Kapselhülle kommen Polymere in Betracht, die im zu verkapselnden Härter unlöslich sind und einen Schmelzpunkt von 50 bis 150°C aufweisen. Beispiele für geeignete Polymere sind KohlenwasserstoffWachse, Polyethylenwachse, Wachsester, Polyester, Polyamide, Polyacrylate, Polymethacrylate oder Mischungen mehrerer solcher Polymeren.

In einer dritten Ausführungsform können Isocyanatgruppen terminierte Polyurethanpolymere eingesetzt werden, deren Isocyanatgruppen mit thermisch labilen Blockierungsgruppen, wie beispielsweise mit Caprolactam, umgesetzt wurden oder solche, deren Isocyanatgruppen zu thermisch labilen Uretdionen dimerisiert wurden.

In einer vierten Ausführungsform können Polyurethanzusammensetzungen eingesetzt werden, welche neben einem Hydroxylgruppen terminierten Polyurethanpolymer und/oder mindestens einem polymeren Polyol, wie es vorhergehend beschrieben wurde, weiterhin mindestens einen verkapseltes oder oberflächendeaktiviertes Polyisocyanat als Härter umfassen. Verkapselte oder oberflächendeaktivierte Polyisocyanate sind dem Fachmann bekannt und beispielsweise beschreiben in EP 0 204 970 oder in EP 0 922 720, deren Offenbarung hiermit eingeschlossen ist. Als Polyisocyanate eignen sich dabei die vorhergehend beschriebenen.

Handelt es sich beim hitzehärtende Strukturklebstoff um eine Polyurethanzusammensetzung sind die Bestandteile zu deren Herstellung, insbesondere Polyisocyanat und Polyol, bezüglich ihrem Molekulargewicht und ihrer Funktionalität, vorzugsweise so zu wählen, dass das Polyurethan einen Schmelzpunkt aufweist, welcher über Raumtemperatur liegt, insbesondere im Bereich von 23 bis 95°C.

Der hitzehärtende Strukturklebstoff kann weitere Bestandteile enthalten, wie sie üblicherweise in hitzehärtenden Strukturklebstoffen eingesetzt werden.

Insbesondere enthält der hitzehärtende Strukturklebstoff zusätzlich mindestens einen Füllstoff. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff sind sowohl die organisch beschichteten als auch die unbeschichteten kommerziell erhältlichen und dem Fachmann bekannten Formen gemeint. Ein weiteres Beispiel sind funktionalisierte Alumoxane, wie sie z. B. in US 6,322,890 beschrieben sind und deren Inhalt hiermit durch Bezugnahme eingeschlossen wird.

Vorteilhaft beträgt der Anteil des Füllstoffs 1 bis 60 Gew.-%, vorzugsweise 5 bis 50 Gew.-%, insbesondere 10 bis 35 Gew.-%, bezogen auf das Gewicht des gesamten hitzehärtenden Strukturklebstoffs.

Als weitere Bestandteile umfasst der hitzehärtende Strukturklebstoff insbesondere auch Thixothropierungsmittel wie beispielsweise Aerosile oder Nanoclays, Zähigkeitsmodifikatoren, Reaktivverdünner sowie weitere dem Fachmann bekannte Bestandteile.

Meist bevorzugt handelt es sich beim hitzehärtenden Strukturklebstoff um eine einkomponentige, hitzehärtende Epoxidharzzusammensetzung.

Die Herstellung erfindungsgemässer Verstärkungselemente kann, abhängig von der Ausführungsform des Verstärkungselements unterschiedlich erfolgen.

In einem ersten Schritt wird typischerweise ein Träger aus Kunststoff in der gewünschten Form bereitgestellt. In einem zweiten Schritt wird dann dieser Träger mit einer Metallbeschichtung versehen. Dies kann, wie bereits vorhergehend beschrieben, auf unterschiedliche Art und Weisen erfolgen.

In einem unabhängigen Verfahren wird ein hitzehärtender Strukturklebstoff bereitgestellt, welcher dann, typischerweise durch Einmischen eines Treibmittels, zu einem schäumbaren, hitzehärtenden Strukturklebstoff modifiziert wird. Dieser schäumbare, hitzehärtende Strukturklebstoff wird anschliessend zumindest teilweise auf die Metallbeschichtung des Trägers aufgebracht.

Handelt es sich bei der Metallbeschichtung um eine solche, die nicht durch Kunststoffgalvanisierung auf den Träger aufgebracht wird, sondern bereits als Blech oder dergleichen vorliegt, kann das Verstärkungselement auch dadurch hergestellt werden, dass das Metall mit dem schäumbaren, hitzehärtenden Strukturklebstoff beschichtet wird. Danach können aus dem Verbund von Metall und Strukturklebstoff Formen ausgeschnitten oder gestanzt werden, welche wiederum an einem in der passenden Form vorliegenden Träger angebracht werden.

Analog dazu können auch Verstärkungselemente hergestellt werden, welche einen hitzehärtenden Strukturklebstoff als Formgedächtnismaterial aufweisen. Insbesondere wird hierbei erst das Metall, als Metallblech oder dergleichen, mit dem hitzehärtenden Strukturklebstoff, umfassend mindestens ein Elastomer, welches als durchdringendes Polymernetzwerk im Strukturklebstoff vorliegt, in seiner ursprünglichen Form beschichtet. Nach der Beschichtung kann dann der Strukturklebstoff auf dem Metall wie vorhergehend beschrieben, beispielsweise durch Pressen, Walzen und dergleichen bei erhöhter Temperatur in seine temporäre Form gebracht werden und danach in dieser Form abgekühlt werden. Danach können aus dem Verbund von Metall und Strukturklebstoff wiederum Formen ausgeschnitten oder gestanzt werden, welche an einem in der passenden Form vorliegenden Träger angebracht werden.

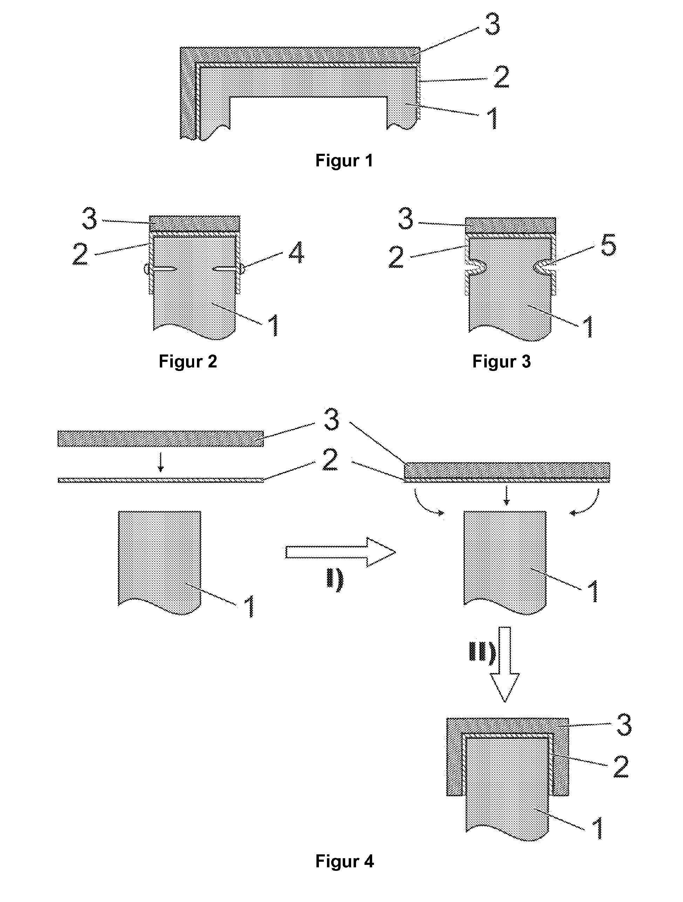

Figur 1 zeigt schematisch einen Ausschnitt aus einem Verstärkungselement umfassend einen Träger 1 aus einem Kunststoff, welcher mit einem Metall 2 beschichtet ist. Auf der Metallschicht befindet sich ein hitzehärtender Strukturklebstoff 3, welcher ein schäumbarer, hitzehärtender Strukturklebstoff oder ein hitzehärtenden Strukturklebstoff als Formgedächtnis-Material in seiner temporären Form ist.

Figuren 2 und 3 zeigen wie Figur 1 Verstärkungselemente mit Träger 1, Metall 2 und hitzehärtendem Strukturklebstoff 3, wobei Figur 2 die Befestigung des Metalls am Träger mittels Nägel 4 und Figur 3 die Befestigung des Metalls am Träger mittels Bördelung 5 zeigt.

Figur 3 zeigt schematisch ein Verfahren zur Herstellung eines erfindungsgemässen Verstärkungselements, wobei in einem ersten Schritt I) ein hitzehärtender Strukturklebstoff 3, welcher ein schäumbarer, hitzehärtender Strukturklebstoff oder ein hitzehärtenden Strukturklebstoff als Formgedächtnis-Material in seiner temporären Form ist, auf einem Metall 2 aufgebracht wird. In einem zweiten Schritt II) wird dann das Metall zusammen mit dem hitzehärtenden Strukturklebstoff an den Träger 1 angepasst und angebracht.

Weiterhin umfasst die Erfindung die Verwendung eines Verstärkungselements, wie es vorhergehend beschrieben wurde, zur Verstärkung von Hohlräumen von strukturellen Bauteilen. Vorzugsweise werden derartige strukturelle Bauteile in Karosserien und/oder Rahmen von Transport- und Fortbewegungsmitteln, insbesondere von Fahrzeugen zu Wasser oder zu Land oder von Luftfahrzeugen, eingesetzt. Bevorzugt umfasst die Erfindung die Verwendung eines erfindungsgemässen Verstärkungselements in Karosserien oder Rahmen von Automobilen, Lastkraftwagen, Eisenbahnwagen, Booten, Schiffen, Hubschraubern und Flugzeugen, meist bevorzugt in Automobilen.

Einweiterer Aspekt der vorliegenden Erfindung betrifft ein Verfahren zur Verstärkung in Hohlräumen von strukturellen Bauteilen umfassend die Schritte:
a) Platzieren eines Verstärkungselements gemäss vorhergehender Beschreibung in den Hohlraum eines strukturellen Bauteils;
b) Erwärmen des hitzehärtenden Strukturklebstoffs auf dem Verstärkungselement auf eine Temperatur oberhalb der Glassübergangstemperatur Tg des hitzehärtenden Strukturklebstoffs, und wobei
   - diese Temperatur die Schäumungstemperatur des schäumbaren, hitzehärtenden Strukturklebstoffs ist; oder
   - diese Temperatur die Temperatur ist, bei welcher das Formgedächtnis-Material in seine ursprüngliche Form zurückgeht;
c) Aushärten des hitzehärtenden Strukturklebstoffs.

Insbesondere weist der der Träger des Verstärkungselements eine Metallbeschichtung auf, welche durch Induktion erwärmt werden kann, wobei die Schritte b) und c) durch ein elektromagnetisches Wechselfeld einer Induktionsspule bewirkt werden.

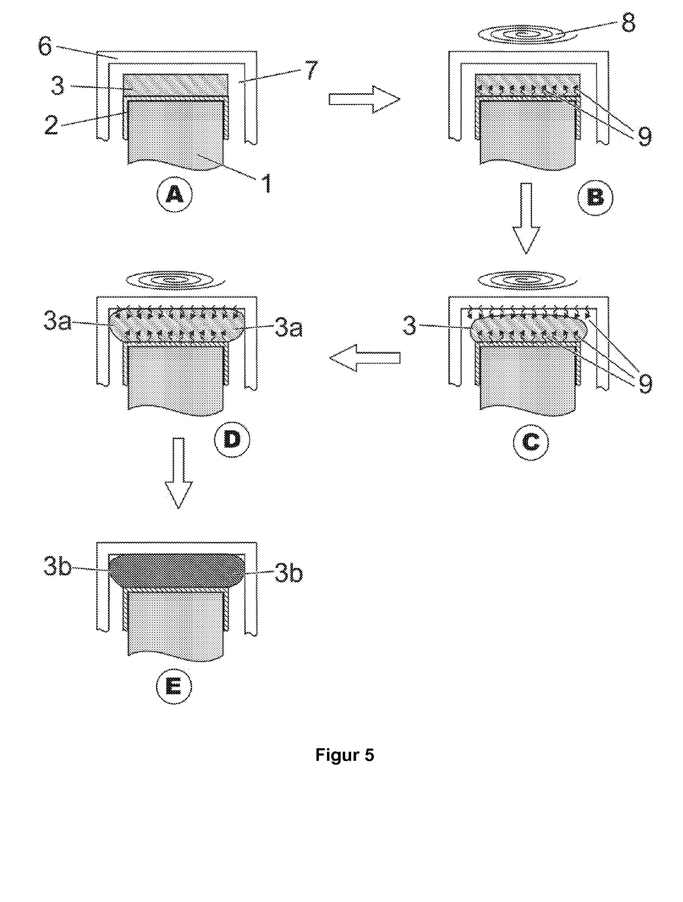

Figur 5 zeigt schematisch die Verstärkung in einem Hohlraum 7 eines strukturellen Bauteils 6, wobei Figur 5A ein im Inneren eines strukturellen Bauteils angebrachtes Verstärkungselement, bestehend aus einem Träger 1 aus Kunststoff, welcher mit einem Metall 2 beschichtet ist, und einem hitzehärtenden Strukturklebstoff 3, welcher ein schäumbarer, hitzehärtender Strukturklebstoff oder ein hitzehärtender Strukturklebstoff als Formgedächtnis-Material in seiner temporären Form ist. Durch Anlegen eines elektromagnetischen Wechselfelds einer Induktionsspule 8 erwärmen sich die in Reichweite des Wechselfelds befindlichen Metallteile, wodurch Wärme 9 an den Strukturklebstoff abgegeben wird, wie dies in Figur 5B gezeigt ist. Durch den Wärmeeinfluss setzt die Verformung des hitzehärtenden Strukturklebstoffs ein, d.h. je nach Ausführungsform der Schäumungsvorgang oder der Übergang des Formgedächtnismaterials in seine ursprüngliche Form. Bei fortgeschrittener Ausdehnung bzw. Verformung des hitzehärtenden Strukturklebstoffs, gelangt dieser auch in den Bereich, wo er vor der Wärme, welche das elektromagnetische Wechselfeld der Induktionsspule 8 im strukturellen Bauteil 6 erzeugt, so wie die in Figur 5C dargestellt ist. Nach vollständiger Ausdehnung bzw. Verformung des hitzehärtenden Strukturklebstoffs 3a setzt unter weiterem und erhöhtem Einfluss des elektromagnetischen Wechselfelds der Induktionsspule 8 die Aushärtung des hitzehärtenden Strukturklebstoffs ein. Dies ist in Figur 5D gezeigt. Schliesslich zeigt Figur 5E den vollständig ausgehärteten Strukturklebstoff 3b und das verstärkte strukturelle Bauteil 6.

### Bezugszeichenliste

- 1: Träger
- 2: Metall
- 3: hitzehärtender Strukturklebstoff nicht geschäumt bzw. in temporärer Form
- 3a: hitzehärtender Strukturklebstoff nach Ausdehnung bzw. Verformung
- 3b: ausgehärteter Strukturklebstoff
- 4: Nagel
- 5: Bördelung
- 6: strukturelles Bauteil
- 7: Hohlraum
- 8: Induktionsspule
- 9: Wärme

## Patentansprüche

1. Verstärkungselement zur Verstärkung in Hohlräumen von strukturellen Bauteilen umfassend einen Träger aus einem Kunststoff, welcher zumindest teilweise mit einem Metall beschichtet ist; und
- einen an der Metallbeschichtung des Trägers angebrachten schäumbaren, hitzehärtenden Strukturklebstoff;
oder
- einen an der Metallbeschichtung des Trägers angebrachten hitzehärtenden Strukturklebstoff, welcher als Formgedächtnis-Material ausgebildet ist.

2. Verstärkungselement gemäss einem der vorhergehenden Ansprüche, **dadurch gekennzeichnet, dass** das Metall ausgewählt ist aus der Gruppe bestehend aus Aluminium, Stahl und Legierungen von Eisen und/oder Aluminium.

3. Verstärkungselement gemäss einem der Ansprüche 1 und 2, **dadurch gekennzeichnet, dass** das Metall ein durch Induktion erwärmbares Metall ist.

4. Verstärkungselement gemäss einem der vorhergehenden Ansprüchen, **dadurch gekennzeichnet, dass** die Metallschicht eine Schichtdicke von 0.03 bis 1.5 mm aufweist.

5. Verstärkungselement gemäss einem der Ansprüche 1 bis 4, **dadurch gekennzeichnet, dass** das Metall mit mindestens einem mechanischen Befestigungsmittel am Kunststoff befestigt ist.

6. Verstärkungselement gemäss einem der Ansprüche 1 bis 4, **dadurch gekennzeichnet, dass** das Metall auf den Kunststoff geklebt ist.

7. Verstärkungselement gemäss einem der vorhergehenden Ansprüche, **dadurch gekennzeichnet, dass** der hitzehärtende Strukturklebstoff eine Glasübergangstemperatur Tg im Bereich von 23 °C bis 95 °C aufweist.

8. Verstärkungselement gemäss einem der vorhergehenden Ansprüche, **dadurch gekennzeichnet, dass** der hitzehärtende Strukturklebstoff eine Aushärtungstemperatur von 120 °C bis 220 °C aufweist.

9. Verstärkungselement gemäss Anspruch 8, **dadurch gekennzeichnet, dass** der hitzehärtende Strukturklebstoff ausgewählt ist aus der Gruppe bestehend aus einer Epoxidharzzusammensetzung und Polyurethanzusammensetzung.

10. Verstärkungselement gemäss Anspruch 9, **dadurch gekennzeichnet, dass** der hitzehärtende Strukturklebstoff eine Epoxidharzzusammensetzung ist umfassend mindestens ein Epoxidharz **A** und mindestens einen Härter **B** für Epoxidharze, welcher durch erhöhte Temperatur aktiviert wird.

11. Verstärkungselement gemäss einem der vorhergehenden Ansprüche, **dadurch gekennzeichnet, dass** der hitzehärtende Strukturklebstoff, welcher als Formgedächtnis-Material ausgebildet ist, ein Elastomer enthält, welches als durchdringendes Polymernetzwerk im Strukturklebstoff vorliegt.

12. Verfahren zur Verstärkung in Hohlräumen von strukturellen Bauteilen umfassend die Schritte:
a) Platzieren eines Verstärkungselements gemäss einem der Ansprüche 1 bis 11 in den Hohlraum eines strukturellen Bauteils;
b) Erwärmen des hitzehärtenden Strukturklebstoffs auf dem Verstärkungselement auf eine Temperatur oberhalb der Glassübergangstemperatur Tg des hitzehärtenden Strukturklebstoffs, und wobei
- diese Temperatur die Schäumungstemperatur des schäumbaren, hitzehärtenden Strukturklebstoffs ist; oder
- diese Temperatur die Temperatur ist, bei welcher das Formgedächtnis-Material in seine ursprüngliche Form zurückgeht;
c) Aushärtung des hitzehärtenden Strukturklebstoffs.

13. Verfahren gemäss Anspruch 12,
mit der Massgabe, dass der Träger des Verstärkungselements eine Metallbeschichtung aufweist, welche durch Induktion erwärmt werden kann,
**dadurch gekennzeichnet, dass** die Schritte b) und c) durch ein elektromagnetisches Wechselfeld einer Induktionsspule bewirkt werden.
